# EUROPÄISCHE PATENTSCHRIFT

(11) **EP 1 318 005 B1**
(45) Veröffentlichungstag und Bekanntmachung des Hinweises auf die Patenterteilung: **24.10.2007**
(21) Anmeldenummer: 02025296.1
(22) Anmeldetag: 13.11.2002
(51) Int. Cl.: B29C 45/84

(54) **Sicherungsfunktion für eine Spritzgiessmaschine**
Safety function for an injection moulding machine
Fonction de sécurité pour une presse à injecter

(30) Priorität: 06.12.2001 DE 10159893
(43) Veröffentlichungstag der Anmeldung: 11.06.2003
(73) Patentinhaber: Krauss Maffei GmbH, 80997 München (DE)
(72) Erfinder: Züfle, Michael, 85259 Wiedenzhausen (DE)
(74) Vertreter: Zollner, Richard

(56) Entgegenhaltungen:
- EP-A- 0 158 031
- DE-A- 19 902 429
- US-A- 3 857 658
- US-A- 5 800 750
- PATENT ABSTRACTS OF JAPAN vol. 017, no. 595 (M-1503), 29. Oktober 1993 (1993-10-29) & JP 05 177683 A (OKUMA MACH WORKS LTD), 20. Juli 1993 (1993-07-20) & DATABASE WPI Derwent Publications Ltd., London, GB; AN 1993-261233
- PATENT ABSTRACTS OF JAPAN vol. 013, no. 477 (M-885), 27. Oktober 1989 (1989-10-27) & JP 01 188316 A (JAPAN STEEL WORKS LTD:THE), 27. Juli 1989 (1989-07-27)
- PATENT ABSTRACTS OF JAPAN vol. 017, no. 524 (M-1483), 21. September 1993 (1993-09-21) & JP 05 138705 A (NISSEI PLASTICS IND CO), 8. Juni 1993 (1993-06-08)

## Beschreibung

Die Erfindung bezieht sich auf ein Verfahren zum Sichern einer Spritzgießmaschine gegen eine Fehlfunktion, wobei die Spritzgießmaschine ein über einen Elektromotor bewegbares Bauteil aufweist.

Spritzgießmaschinen weisen mindestens zwei Formaufspannplatten auf, wobei eine der Formaufspannplatten fest an einem Maschinenbett verankert ist und die andere relativ dazu beweglich ist. Die Formaufspannplatten tragen jeweils Werkzeughälften, die im geschlossenen Zustand eine Kavität zur Ausbildung eines Kunststoff-Formteils bilden.

Zum Öffnen bzw. Schließen der Kavität wird die bewegliche Formaufspannplatte im Bezug auf die feste Formaufspannplatte verschoben. Befinden sich dabei Hindernisse entlang des Verschiebewegs, kann dies zu einer Blockierung der beweglichen Formaufspannplatte und daraus resultierend zu einer Beschädigung der Maschine führen.

Um dies zu vermeiden, ist aus der EP 0 203 199 B1 bekannt, einerseits die Antriebskraft für die bewegliche Formaufspannplatte während der Verschiebung zu reduzieren, andererseits wird während eines vorgegebenen Zeitintervalls überprüft, ob die Formaufspannplatte eine vorgegebene Wegstrecke durchlaufen hat. Dazu wird bei Erreichen einer ersten Position ein Zeitintervall gemessen, und nach Ablauf dieses Zeitintervalls wird geprüft, ob die Formaufspannplatte eine zweite Position erreicht hat. Ist dies nicht der Fall, wird angenommen, daß die Formaufspannplatte auf dem Verschiebeweg blockiert ist; der Antrieb wird deaktiviert, und es wird ein Alarm ausgelöst.

Bei dem bekannten Verfahren muß zunächst der Ablauf der Intervallzeit abgewartet werden, so daß ein Blockierzustand nicht unmittelbar erkannt werden kann. Somit kann schon während des Ablaufs der Intervallzeit eine Beschädigung der Maschine auftreten.

Das Dokument JP-A-05177683 offenbart ein Verfahren zum Sichern einer Spritzgießmaschine mit einem über einen Elektromotor bewegbaren Bauteil, wobei mittels eines Wegmesssystems die Position und die Geschwindigkeit des bewegbaren Bauteils ermittelt werden und wobei eine Messung der Drehzahl des Elektromotors mittels eines Drehgebers erfolgt.

Das Dokument US-A-5800750 offenbart ebenfalls ein Verfahren zum Sichern einer Spritzgießmaschine mit einem über einen Elektromotor bewegbaren Bauteil, nämlich einer beweglichen Formaufspannplatte, wobei der Elektromotor über einen Drehgeber verfügt, mit dem die Position und die Geschwindigkeit des Bauteils ermittelt werden kann.

Das Dokument DE-A-19902429 offenbart ein Verfahren zum Sichern eines Formwerkzeugs einer Spritzgießmaschine, wobei mehrere von Elektromotoren verfahrbare Formwerkzeugteile vorgesehen sind, wobei die Elektromotoren in Abhängigkeit von in einem Speicher abgelegten Werten angesteuert werden. Mittels Meßeinrichtungen an den Elektromotoren werden deren Drehzahl, Drehrichtung und Stromaufnahme erfasst. Die Bewegungen der Formwerkzeugteile werden außerdem von Sensoren erfasst. Bei einer unerwünschten Berührung der Formwerkzeugteile mit dem Formteil wird zumindest der die Berührung hervorrufende Elektromotor abgeschaltet.

Der Erfindung liegt die Aufgabe zugrunde, ein Verfahren zum Sichern einer Spritzgießmaschine mit einem über einen Elektromotor bewegbaren Bauteil anzugeben, bei dem eine Blockierung des beweglichen Bauteils unmittelbar erkannt wird, wobei ein Fehler im Wegmeßsystem und/oder im Antriebsüberwachungssystem frühzeitig erkannt werden kann.

Die Lösung dieser Aufgabe erfolgt durch ein Verfahren gemäß Patentanspruch 1; die abhängigen Ansprüche betreffen vorteilhafte Weiterentwicklungen der Erfindung.

Erfindungsgemäß wird fortlaufend der Bewegungszustand des Bauteils überwacht, und der Elektromotor wird deaktiviert, wenn keine oder nur eine minimale Bewegung des Bauteils erfaßt wird, wobei die Überwachung über ein herkömmliches Wegmeßsystem erfolgt und gleichzeitig die Drehzahl des Elektromotors mittels eines Drehgebers überwacht wird. Durch die damit gegebene Redundanz kann ein Fehler im Wegmeßsystem und/oder im Antriebsüberwachungssystem frühzeitig erkannt werden.

Beispielsweise kann die Geschwindigkeit des Bauteils fortlaufend ermittelt werden, wobei der Elektromotor deaktiviert wird, wenn die Geschwindigkeit eine Untergrenze erreicht hat oder zu Null wird. Die Geschwindigkeit kann durch geeignete Sensoren wie Induktionssensoren, Tauchspulen, optische Einrichtungen oder über einen Weggeber ermittelt werden.

In einer Weiterbildung der Erfindung wird zyklisch die Position des Bauteils ermittelt, beispielsweise mittels eines Weggebers, und die Positionen in aufeinanderfolgenden Zyklen werden miteinander verglichen. Wird keine Änderung oder nur eine minimale Änderung der Position festgestellt, wird angenommen, daß eine Blockierung eingetreten ist, und der Elektromotor wird deaktiviert.

Eine Blockierung kann auch anhand einer Lageregelung für die momentane Position des beweglichen Bauteils ermittelt werden. Bei der Lageregelung wird fortlaufend während des Verschiebens des Bauteils ein Ist-Wert für die Position durch die Regelung vorgegeben und mit einem Soll-Wert von einem Weggeber verglichen. Während des normalen Betriebs läuft der Ist-Wert dem Soll-Wert innerhalb gewisser Grenzen hinterher ("Schleppfehler"). Bei einer Blockierung vergrößert sich der Schleppfehler, d.h. die Differenz zwischen Soll- und Ist-Wert. Erfindungsgemäß wird deshalb der Elektromotor deaktiviert, wenn der Schleppfehler eine vorgegebene Grenze überschreitet.

Erfindungsgemäß kann ein Blockierungszustand indirekt auch durch Überwachen eines geregelten Antriebs erfaßt werden. Auch hier läuft der Ist-Wert einer Betriebskenngröße des Elektromotors dem Soll-Wert hinterher, wobei im Blockierungsfall die Differenz bzw. der Betrag der Differenz zwischen Sollund Ist-Wert eine bestimmte Grenze überschreitet. Eine geeignete Betriebskenngröße ist beispielsweise die Drehzahl eines Motors, insbesondere eines Elektromotors, wobei der Drehgeber des Motors überwacht wird.

Das erfindungsgemäße Verfahren ermöglicht eine direkte Fehlererkennung und vermeidet somit unnötige Wartezeit auf ein folgendes Ereignis (Ablauf einer Überwachungszeit).

Vorzugsweise wird mit dem erfindungsgemäßen Verfahren die Bewegung einer beweglichen Formaufspannplatte überwacht; andere bewegliche Bauteile, die entsprechend überwacht werden können, sind z.B. eine Auswerfervorrichtung oder ein Einspritzaggregat.

Zur Implementierung des erfindungsgemäßen Verfahrens werden Signale von Sensoren (beispielsweise ein konventionelles Meßsystem, Drehgeber eines Motors, zusätzliche Geschwindigkeitssensoren etc.) einer Steuerung (zusätzliche Steuerung oder modifizierte vorhandene Steuerung) zugeführt und dort entsprechend verarbeitet, wobei die Steuerung ggf. den Antrieb abschaltet und/oder die Abgabe eines Alarmsignals veranlaßt. Weitere Einzelheiten zur Implementierung des Verfahrens in der Praxis sind dem Fachmann geläufig und werden deshalb hier nicht weiter erläutert.

## Patentansprüche

1. Verfahren zum Sichern einer Spritzgießmaschine gegen eine Fehlfunktion, wobei die Spritzgießmaschine ein über einen Elektromotor bewegbares Bauteil aufweist, und wobei der Elektromotor einen. Drehgeber aufweist,
**dadurch gekennzeichnet,**
**dass** man bei aktiviertem Elektromotor den Bewegungszustand des Bauteils überwacht und den Elektromotor deaktiviert, wenn keine oder nur eine minimale Bewegung des Bauteils erfaßt wird, wobei die Überwachung über ein herkömmliches Wegmeßsystem erfolgt und gleichzeitig die Drehzahl des Elektromotors mittels des Drehgebers überwacht wird.

2. Verfahren nach Anspruch 1, wobei
man die Geschwindigkeit überwacht und den Elektromotor deaktiviert, wenn die Geschwindigkeit eine Untergrenze erreicht.

3. Verfahren nach Anspruch 2, wobei
die Untergrenze eine Geschwindigkeit von Null ist.

4. Verfahren nach Anspruch 1, wobei
man zyklisch die Position des Bauteils überwacht und man den Elektromotor deaktiviert, wenn in aufeinanderfolgenden Zyklen keine oder nur eine unter einem Minimalwert liegende Änderung der Position festgestellt wird.

5. Verfahren nach Anspruch 1 mit einer Lageregelung, bei der jeweils die momentane Ist-Position und die momentane Soll-Position des bewegbaren Bauteils ermittelt werden, wobei
man den Elektromotor deaktivert, wenn der Betrag der Differenz zwischen Soll- und Ist-Position einen vorgegebenen Wert überschreitet.

6. Verfahren nach einem der Ansprüche 1 bis 5 mit einer Regelung des Elektromotors, wobei man zyklisch einen momentanen Soll-Wert einer Betriebskenngröße des Elektromotors mit dem momentanen Ist-Wert der Betriebskenngröße vergleicht und wobei man den Elektromotor deaktiviert, wenn der Betrag der Differenz zwischen Ist- und Soll-Wert außerhalb eines vorgegebenen Bereichs liegt.

7. Verfahren nach einem der vorstehenden Ansprüche, wobei
das bewegbare Bauteil eine Formaufspannplatte einer Spritzgießmaschine ist.

## Claims

1. A method for securing an injection moulding machine against a malfunction, wherein the injection moulding machine has a component which can be moved by an electric motor and wherein the electric motor has a rotary encoder, **characterised in that** when the electric motor is activated, the movement state of the component is monitored and the electric motor is deactivated when no movement or only a minimal movement of the component is detected, wherein the monitoring takes place via a conventional distance measuring system and at the same time the rotational speed of the electric motor is monitored by means of the rotary encoder.

2. The method according to claim 1, wherein the speed is monitored and the electric motor is deactivated when the speed reaches a lower limit.

3. The method according to claim 2, wherein the lower limit is a speed of zero.

4. The method according to claim 1, wherein the position of the component is monitored cyclically and the electric motor is deactivated when none or only a change in position below a minimum value is detected.

5. The method according to claim 1 comprising a position control wherein in each case the instantaneous actual position and the instantaneous desired position of the movable component are determined, wherein the electric motor is deactivated when the magnitude of the difference between the desired and actual position exceeds a predefined value.

6. The method according to any one of claims 1 to 5 comprising a control of the electric motor, wherein an instantaneous desired value of an operating characteristic of the electric motor is compared cyclically with the instantaneous actual value of the operating characteristic and wherein the electric motor is deactivated when the magnitude of the difference between the actual and desired value lies outside a predefined range.

7. The method according to any one of the preceding claims, wherein the movable component is a mould clamping plate of an injection moulding machine.

## Revendications

1. Procédé de sécurisation d'une machine de moulage par injection contre un fonctionnement défectueux, dans lequel la machine de moulage par injection comporte une composante mobile à l'aide d'un moteur électrique et dans lequel le moteur électrique comporte un indicateur de rotation,
**caractérisé en ce que**
on surveille l'état de mouvement de la composante pendant que le moteur électrique est activé et on désactive le moteur électrique lorsqu'aucun mouvement ou un mouvement minimal de la composante est détecté, la surveillance étant faite à l'aide d'un système traditionnel de mesure de course et le régime du moteur électrique étant simultanément surveillé au moyen de l'indicateur de rotation.

2. Procédé selon la revendication 1, dans lequel on surveille la vitesse et on désactive le moteur électrique lorsque la vitesse atteint une limite inférieure.

3. Procédé selon la revendication 2, dans lequel la vitesse inférieure est de zéro.

4. Procédé selon la revendication 1, dans lequel on surveille la position de la composante et on désactive le moteur électrique lorsqu'on ne constate dans les cycles successifs pas de modification ou seulement une modification inférieure à une valeur minimale de la position.

5. Procédé selon la revendication 1, incluant un réglage de paliers lors duquel la position réelle momentanée et la position théorique momentanée de la composante mobile sont respectivement déterminées, dans lequel on désactive le moteur électrique lorsque le montant de la différence entre la position théorique et la position réelle dépasse une valeur prescrite.

6. Procédé selon une des revendications 1 à 5, incluant un réglage du moteur électrique, dans lequel on compare cycliquement une valeur théorique momentanée d'une caractéristique de fonctionnement du moteur électrique à la valeur réelle momentanée de la caractéristique de fonctionnement et on désactive le moteur électrique lorsque le montant de la différence entre la valeur théorique et la valeur réelle se situe en dehors d'une plage prescrite.

7. Procédé selon une des revendications précédentes, dans lequel la composante mobile est une plaque de montage de moule d'une machine de moulage par injection.
